# EUROPEAN PATENT SPECIFICATION

(11) **EP 2 999 867 B1**
(45) Date of publication and mention of the grant of the patent: **28.06.2017**
(21) Application number: 14728597.7
(22) Date of filing: 13.05.2014
(51) Int. Cl.: F02B 75/04

(54) **A CONNECTING ROD, A BIG END BEARING AND AN ARRANGEMENT FOR CHANGING THE EFFECTIVE LENGTH OF A CONNECTING ROD FOR AN INTERNAL COMBUSTION PISTON ENGINE**
PLEUELSTANGE, PLEUELLAGER UND ANORDNUNG ZUR ÄNDERUNG DER EFFEKTIVEN LÄNGE EINER PLEUELSTANGE FÜR EINE HUBKOLBENBRENNKRAFTMASCHINE
BIELLE, COUSSINET DE TÊTE DE BIELLETTE ET AGENCEMENT DESTINÉ À MODIFIER LA LONGUEUR EFFECTIVE D'UNE BIELLE POUR UN MOTEUR À PISTON À COMBUSTION INTERNE

(30) Priority: 22.05.2013 FI 20135550
(43) Date of publication of application: 30.03.2016
(73) Proprietor: Wärtsilä Finland Oy, 65380 Vaasa (FI)
(72) Inventor: HEIKKILÄ, Ville, FI-65101 Vaasa (FI); LAAKSO, Ossi, FI-65101 Vaasa (FI); MÄENPÄÄ, Janne, FI-65101 Vaasa (FI)
(74) Representative: Genip Oy
(86) International application number: PCT/FI2014/050354
(87) International publication number: WO 2014/188060

(56) References cited:
- EP-A1- 1 375 862
- US-A- 2 897 804
- US-B1- 7 597 071

## Description

### Technical field

The present invention relates to internal combustion piston engines. Particularly, the present invention relates to adjusting compression ratio of the piston engine by means of an arrangement for changing the effective length of a connecting rod for an internal combustion piston engine.

### Background art

In internal combustion piston engines the reciprocating movement of the piston is transformed into a rotating movement of the crankshaft by connecting each piston via a connecting rod to the crankshaft. Attempts to accomplish dynamic i.e. on the fly variable compression ratio in an internal combustion piston engine have been made since long time ago. One of the most common ways of approach to this includes an effective lengthening and shortening of the connecting rod, which joins the reciprocating piston to a rotating crankshaft.

For example DE 19503425 discloses a piston engine in which the effective length of the connecting rod may be adjusted. A piston pin which joins the connecting rod to the piston is provided with an eccentric bushing. The eccentric bushing is provided with fixed stop discs at its ends, protruding axially over either sides of the small end of the connecting rod. There are stop notches arranged to the rim of the disks which together with a locking member may retain the bushing at two positions corresponding two effective lengths of the connecting rod.

Another option of changing the compression ratio, not effecting on the effective length of the connecting rod, is shifting the position of the rotational axis of the crank shaft in respect to the body of the engine. Such a proposal is shown in JP 2000130201 and DE 4226361. This solution is very complicated particular in multi-cylinder engine and in larger engines.

In US5165368 there is shown a mechanism for varying the compression ratio of an engine. An eccentric on which the connecting rod is journaled is rotated relative to the crankshaft to vary the crank radius, which will vary the compression ratio. A fluid pressure control system includes a pressure movable shaft controlling the flow of fluid past one-way check valves to oil filled hydraulic cylinders that contain pistons/plungers operably connected to the eccentric and crankshaft, to control the movement of the eccentric in response to the torsional impulses.US2897804 shows a further arrangement for changing the effective length of a connecting rod.

It is an object of the invention to provide an arrangement for changing the effective length of a connecting rod for an internal combustion piston engine, by means of which the compression ratio of the engine may be changed reliably and flexibly during the running of the engine.

### Disclosure of the Invention

The objects of the invention are met by an arrangement for changing the effective length of a connecting rod for an internal combustion piston engine, which arrangement comprises a body part attachable to a connecting rod and an eccentric sleeve arranged rotatably in the body part, and the eccentric sleeve is provided with an inner surface for bearing and gear teeth circumscribing the eccentric sleeve, and the arrangement is provided with drive device comprising a fluid motor in force transmission connection with the gear teeth supported by the body part and arranged to rotate the eccentric sleeve, wherein the lubrication oil is arranged to be led through the bearing to the fluid motor, and the arrangement is provided with a flow control device arranged to control the flow of the pressurized lubrication oil from the bearing via the fluid motor and wherein the flow control device is an on/off valve.

The arrangement provides cylinder wise variable, on the fly, compression ratio adjustment for a piston engine.

According to an embodiment of the invention the on/off valve is operated by a mechanical pusher system.

According to an embodiment of the invention the drive device comprises a worm drive operated by the fluid motor and being arranged to rotate the eccentric sleeve.

According to an embodiment of the invention the drive device comprises a self-locking worm drive.

According to an embodiment of the invention the fluid motor is a vane motor.

A connecting rod for a piston engine which may be provided with the arrangement according to the invention, wherein the big end bearing housing constitutes the body part.

Invention relates also to a multi-cylinder internal combustion engine in which each of its connecting rods is provided with the arrangement for changing the effective length of a connecting rod according to the invention and the engine is provided with a control system which is arranged to define, based on operation parameters of the engine, a set value for compression ratio, wherein the control system is further arranged to control each of the arrangement for changing the effective length of a connecting rod independently while the engine is running.

The present invention is suitable for changing compression ratio during the operation of the engine. The present invention is particularly suitable for engines capable of producing power more than 150 kW per cylinder. The present invention is particularly suitable for engines having cylinder diameter at least 200 mm.

### Brief Description of Drawings

In the following, the invention will be described with reference to the accompanying exemplary, schematic drawings, in which
Figure 1 illustrates a connecting rod assembly according to an embodiment of the invention, and
Figure 2 illustrates a multi-cylinder internal combustion engine in to which a connecting rod assembly according to the invention has been applied.

### Detailed Description of Drawings

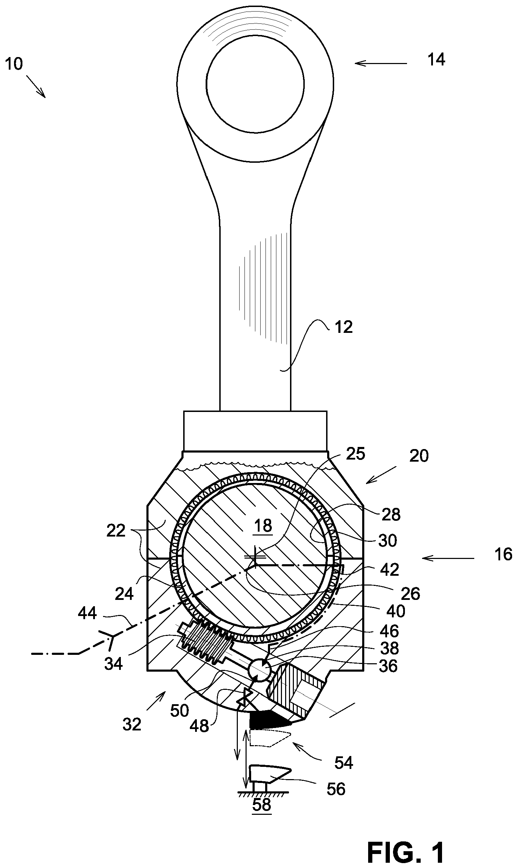

In figure 1 there is schematically shown a connecting rod assembly 10 in an internal combustion piston engine according to an embodiment of the invention. The assembly comprises a connecting rod 12 having a small end bearing 14 and a big end bearing 16. When it is assembled to an engine the big end bearing is coupled to a crankshaft 18, only a crank pin of which is shown in the figure.

The connecting rod 12 comprises an arrangement 20 for changing the effective length of the connecting rod 12 in connection with its big end bearing 16.

The arrangement 20 comprises a body part 22 which is in advantageously constituted by the housing of the big end bearing.

The arrangement 20 further comprises an eccentric sleeve 24. The sleeve is arranged rotatably in the body part 22 in respect of a center 26 a circular housing provided for the eccentric sleeve. The eccentric sleeve 24 is provided with an inner surface 28 for bearing the center 25 of which deviates from the center 26 of the body part. This is to be understood so that the surface actually is a bearing surface or the surface is adapted for assemble of a separate bearing on the surface. The eccentric sleeve is additionally provided with gear teeth 30 circumscribing the eccentric sleeve. The gear teeth may be arranged by means of a separate part of the gear may be arranged directly to the sleeve. The gear teeth form a worm gear 30. The arrangement is further provided with a drive device 32 in force transmission connection with the gear teeth 30 supported by the body part 22 and arranged to rotate the eccentric sleeve 24.

The drive device 32 comprises advantageous a worm 34 co-operating with the worm gear 30. The gear is arranged advantageously so that the worm gear is self-locking meaning that the gear 30 cannot drive the worm 34.

The drive device 32 comprises a fluid motor 36 arranged to be operated by the pressurized lubrication oil of the engine. The fluid motor 32 has an input 38 for pressurized working medium, which is in this case oil. The input 38 is in connection with a groove or alike 40 in the housing of the body part provided for the eccentric sleeve 24 via a channel 46 provided in the body part 22. The eccentric sleeve is provided a flow path 42, such as radial drilling(s), leading from its inner surface to its outer surface via which the pressurized oil may flow to the groove or alike 40. Pressurized oil is supplied to the flow path 42 from a lubrication oil system in the engine via channel(s) 44 arranged to the crank shaft 18. Thus, the flow path 42 in the eccentric sleeve arranged to supply the lubrication oil through the sleeve into the fluid motor 36 for operating the motor and drive device 32. So, the pressurized lubrication oil is lead through the bearing to the fluid motor 36. A common oil supply may be used for feeding the oil to the piston pin and/or piston of the engine (not shown). In the arrangement the flow path 42 in the eccentric sleeve, the fluid motor 36 and the flow control device 48 are connected in series. It is to be understood that the arrangement is provided with necessary lubrication oil channels to ensure proper lubrication operation even if the flow control device 48 is closed.

The arrangement is provided with a flow control device 48 connected to an output 50 of the fluid motor 32 arranged to control the flow of the pressurized lubrication oil via the fluid motor and thus the operation of the worm gear 30. The flow control device 48 is coupled in series with the fluid motor 32 either allowing or preventing the flow of the oil through the fluid motor. The flow control device 48 is an on/off type valve so that its operation and construction is as simple.

It is notable that in the arrangement the eccentric sleeve is arranged to the rotated in one direction only making the arrangement simple. Rotation takes place only in one direction and therefore the gear teeth 30 circumscribes entirely the eccentric sleeve 24.

In the arrangement the flow control device 48 is advantageously an on/off valve. The on/off valve is may be triggered e.g. by mechanical pusher system 54. A pusher 56 is movably attached to the engine block 58 so that it may be brought into contact with the mechanical pusher system of the valve 48 while the big end bearing passes the pusher 56. The pusher system 54 is arranged to change the on/off status of the valve triggered by the mechanical contact of the pusher 56.

According to an embodiment of the invention the fluid motor is a vane motor. Vane motor is technically advantageous because it provides only small leakage and low static friction. It is also provides simple and compact structure and does not require high pressure difference to operate and it is easily integratable to the body part 22.

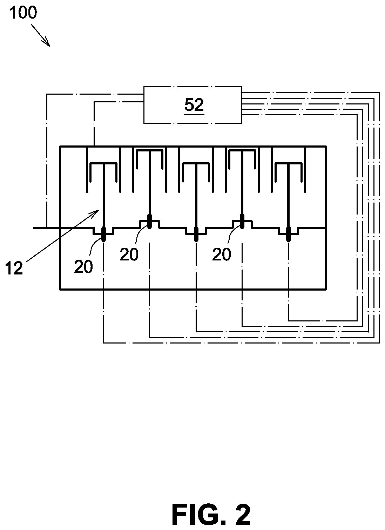

In figure 2 there is shown a multi-cylinder internal combustion engine 100 and each of its connecting rods 12 is provided with the arrangement 20 for changing the effective length of a connecting rod according to the invention. The engine is provided with a control system 52 which is arranged to define, based on operation parameters of the engine which are made available to the control system by e.g. measurements or calculations, a set value for each connecting rod's 12 length. The control system is further arranged to control each of the arrangement 20 for changing the effective length of a connecting rod independently while the engine is running.

While the invention has been described herein by means of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Arrangement (20) for changing the effective length of a connecting rod (12) for an internal combustion piston engine, which arrangement comprises a body part (22) attachable to a connecting rod and an eccentric sleeve (24) arranged rotatably in the body part, and the eccentric sleeve is provided with an inner surface (28) for bearing and gear teeth (30) circumscribing the eccentric sleeve, and wherein the arrangement is provided with drive device (32) comprising a fluid motor (32) in force transmission connection with the gear teeth supported by the body part (22) and arranged to rotate the eccentric sleeve (24), the fluid motor (32) is arranged to be operated by the pressurized lubrication oil of the engine (44), **wherein** the lubrication oil is arranged to be led through the bearing to the fluid motor (36), and the arrangement is provided with a flow control device (48) arranged to control the flow of the pressurized lubrication oil from the bearing via the fluid motor and wherein the flow control device (48) is an on/off valve.

2. Arrangement according to claim 1, **wherein** the flow path (42) in the eccentric sleeve, the fluid motor (36) and the flow control device (48) are connected in series.

3. Arrangement according to claim 1 or 2, **wherein** the on/off valve is operated by a mechanical pusher system (54).

4. Arrangement according to claim 1, **wherein** the drive device comprises a worm drive operated by the fluid motor and being arranged to rotate the eccentric sleeve (24).

5. Arrangement according to claim 4, **wherein** the drive device (32) comprises a self-locking worm drive.

6. Arrangement according to claim 1, **wherein** the fluid motor is a vane motor.

7. Connecting rod (12) for a piston engine which comprises an arrangement according to anyone of the preceding claims, **wherein** the big end bearing housing constitutes the body part (22).

8. A multi-cylinder internal combustion engine (50) in which each of its connecting rods (12) is provided with the arrangement for changing the effective length (20) of a connecting rod according anyone of the preceding claim 1-7 and the engine is provided with a control system (52) which is arranged to define, based on operation parameters of the engine, a set value for compression ratio, **wherein** the control system is further arranged to control each of the arrangement for changing the effective length of a connecting rod (12) independently while the engine is running.

## Patentansprüche

1. Anordnung (20) zum Ändern der wirksamen Länge einer Pleuelstange (12) für einen Kolbenverbrennungsmotor, wobei die Anordnung einen Hauptteil (22), der an eine Pleuelstange angebracht werden kann, und eine Exzenterhülse (24), die in dem Hauptteil drehbar angeordnet ist, aufweist, und die Exzenterhülse mit einer Innenfläche (28) für Lager- und Zahnradzähne (30) versehen ist, die die Exzenterhülse begrenzt, und wobei die Anordnung mit einer Antriebsvorrichtung (32) versehen ist, die einen Fluidmotor (32) in einer Kraftübertragungsverbindung mit den Zahnradzähnen umfasst, die von dem Hauptteil (22) getragen werden und angeordnet sind, die Exzenterhülse (24) zu drehen, der Fluidmotor (32) angeordnet ist, vom dem Schmieröl des Motors (44), das unter Druck steht, betrieben zu werden, wobei das Schmieröl angeordnet ist, durch das Lager des Fluidmotors (36) geleitet zu werden, und die Anordnung mit einer Flusssteuervorrichtung (48) versehen ist, die angeordnet ist, den Fluss des Schmieröls, das unter Druck steht, von dem Lager über den Fluidmotor zu steuern, und wobei die Flusssteuervorrichtung (48) ein Ein-/Aus-Ventil ist.

2. Anordnung nach Anspruch 1, wobei der Fließweg (42) in der Exzenterhülse, der Fluidmotor (36) und die Flusssteuervorrichtung (48) hintereinander geschaltet sind.

3. Anordnung nach Anspruch 1 oder 2, wobei das Ein-/Aus-Ventil von einem mechanischen Stößelsystem (54) betrieben wird.

4. Anordnung nach Anspruch 1, wobei die Antriebsvorrichtung einen Schneckenantrieb umfasst, der von dem Fluidmotor betrieben wird und angeordnet ist, die Exzenterhülse (24) zu drehen.

5. Anordnung nach Anspruch 4, wobei die Antriebsvorrichtung (32) einen selbsthemmenden Schneckenantrieb umfasst.

6. Anordnung nach Anspruch 1, wobei der Fluidmotor ein Flügelzellenmotor ist.

7. Pleuelstange (12) für einen Kolbenmotor, die eine Anordnung nach einem der vorhergehenden Ansprüche umfasst, wobei das große Endlagergehäuse den Hauptteil (22) bildet.

8. Mehrzylinder-Verbrennungsmotor (50) bei dem jede seiner Pleuelstangen (12) mit der Anordnung zum Ändern der wirksamen Länge (20) einer Pleuelstange nach einem der vorhergehenden Ansprüche 1 bis 7 versehen und der Motor mit einem Steuersystem (52) versehen ist, das angeordnet ist, auf Grundlage von Betriebsparametern des Motors einen Sollwert für das Kompressionsverhältnis festzulegen, wobei das Steuersystem ferner angeordnet ist, jede der Anordnungen zum Ändern der wirksamen Länge einer Pleuelstange (12) getrennt zu steuern, während der Motor läuft.

## Revendications

1. Agencement (20) pour changer la longueur effective d'une bielle (12) pour un moteur à combustion interne à pistons, lequel agencement comprend une partie de corps (22) pouvant être fixée à une bielle et un manchon excentrique (24) agencé de façon rotative dans la partie de corps, et le manchon excentrique est doté d'une surface intérieure (28) pour supporter des dents (30) d'engrenage circonscrivant le manchon excentrique, et dans lequel l'agencement est doté d'un dispositif d'entraînement (32) comprenant un moteur hydraulique (32) en connexion de transmission de force avec les dents d'engrenage supportées par la partie de corps (22) et agencé pour faire tourner le manchon excentrique (24), le moteur hydraulique (32) est agencé pour être activé par l'huile lubrifiante comprimée du moteur (44), dans lequel l'huile lubrifiante est agencée pour être dirigée à travers le palier vers le moteur hydraulique (36), et l'agencement est doté d'un dispositif de commande d'écoulement (48) agencé pour commander l'écoulement de l'huile lubrifiante comprimée à partir du palier par le biais du moteur hydraulique, et dans lequel le dispositif de commande d'écoulement (48) est une soupape tout-ou-rien.

2. Agencement selon la revendication 1, dans lequel les trajets d'écoulement (42) dans le manchon excentrique, le moteur hydraulique (36) et le dispositif de commande d'écoulement (48) sont reliés en série.

3. Agencement selon la revendication 1 ou 2, dans lequel la soupape tout-ou-rien est activée par un système de poussoir mécanique (54).

4. Agencement selon la revendication 1, dans lequel le dispositif d'entraînement comprend un pignon à vis activé par le moteur hydraulique et étant agencé pour faire tourner le manchon excentrique (24).

5. Agencement selon la revendication 4, dans lequel le dispositif d'entraînement (32) comprend un pignon à vis auto-verrouillable.

6. Agencement selon la revendication 1, dans lequel le moteur hydraulique est un moteur à palettes.

7. Bielle (12) pour un moteur à pistons qui comprend un agencement selon l'une quelconque des revendications précédentes, dans lequel la carcasse de palier de l'extrémité large constitue la partie de corps (22).

8. Moteur à combustion interne multi-cylindres (50) dans lequel chacune de ses bielles (12) est dotée de l'agencement pour modifier la longueur effective (20) d'une bielle selon l'une quelconque des revendications précédentes 1 - 7, et le moteur est doté d'un système de commande (52) qui est agencé pour définir, en se basant sur des paramètres de fonctionnement du moteur, une valeur de consigne pour le rapport de compression, dans lequel le système de commande est en outre agencé pour commander chaque agencement pour changer la longueur effective d'une bielle (12) indépendamment, tandis que le moteur marche.
